Europäisches Patentamt

(19) European Patent Office

Office européen des brevets

(11) Publication number: **0 096 124**
**B1**

(12) **EUROPEAN PATENT SPECIFICATION**

(45) Date of publication of patent specification: **03.09.86**

(21) Application number: **82302900.4**

(22) Date of filing: **04.06.82**

(51) Int. Cl.⁴: **B 29 C 67/18,** B 26 D 5/20 // B23D19/06

(54) **Trimming of an elongated non-metallic sheet having a metal embedded therein or attached thereon.**

(43) Date of publication of application:
**21.12.83 Bulletin 83/51**

(45) Publication of the grant of the patent:
**03.09.86 Bulletin 86/36**

(84) Designated Contracting States:
**BE DE FR GB**

(56) References cited:
**EP-A-0 008 912**
**DE-A-2 737 140**
**FR-A-2 010 166**

(73) Proprietor: **Ube Industries, Ltd.**
**12-32, Nishihonmachi 1-chome**
**Ube-shi, Yamaguchi-ken (JP)**

(72) Inventor: **Kunii, Hiroyuki c/o UBE INDUSTRIES, LTD**
**Chiba Sekiyu-Kagaku Kojyo 8-1,**
**Goiminamikaigan**
**Ichihara-shi Chiba-ken (JP)**
Inventor: **Sente, Hirohisa c/o UBE INDUSTRIES, LTD**
**Chiba Sekiyu-Kagaku Kojyo 8-1,**
**Goiminamikaigan**
**Ichihara-shi Chiba-ken (JP)**
Inventor: **Hironaka, Kouji c/o UBE INDUSTRIES, LTD**
**Chiba Sekiyu-Kagaku Kojyo 8-1,**
**Goiminamikaigan**
**Ichihara-shi Chiba-ken (JP)**

(74) Representative: **George, Roger David et al**
**Raworth, Moss & Cook 36 Sydenham Road**
**Croydon Surrey CR0 2EF (GB)**

## Description

The present invention relates to a method and apparatus for trimming an elongated non-metallic sheet having a metal embedded therein or attached thereon over the entire length thereof. In particular, the sheet is a laminated sheet comprising a pair of heat-shrinkable layers fused together with a heating element, such as an electric conductor wire to which electricity is applied, therebetween.

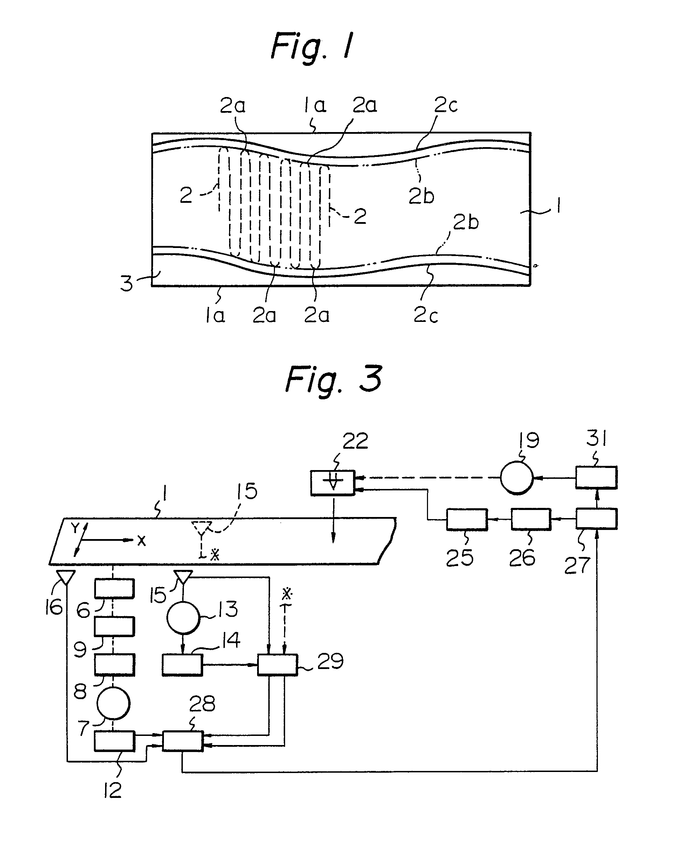

Such a laminated heat-shrinkable sheet with wire embedded therein is well-known as a means for covering and protecting joints of steel pipes in oil pipelines or cables. The sheet is formed by fusing two heat-shrinkable layers of, for example, polyethylene, placed one on top of the other with a wire of, for example, copper therebetween. The layers have the property of being thermally shrinkable in the lengthwise direction. The wire should not be aligned parallel to the shrinking direction but traversely thereto at approximately a right angle and thus has preferbly been arranged in a zigzag manner as shown in Fig. 1, in which the numerals 1 and 2 denote the sheet and the wire, respectively. The finished sheet used as a sealing means has a predetermined length and a pair of electric terminals to be connected to a power source. The terminals are on the two ends of the wire exposed from the sheet at the opposite ends of the sheet. The heat-shrinkable sheet is used in the following manner. The sheet is wound around a steel pipe or cable so as to cover the joint portion entirely. Electricity is then applied through the terminals of the wire embedded in the sheet to heat the wire. The zigzaggedly arranged hot wire heats the entire sheet to shrink it so that it is in extremely close contact with the joint portion. This close contact protects the joint from surface corrosion and improves sealing of the pipe at the joint. Such effects are ensured for a long period even though they depend on the durability of the material forming the heat-shrinkable sheet.

Preferable, the sheet is of polyethylene and wire is of copper.

However, difficulties arise in the manufacture of a polyethylene cover sheet. For example, when the copper wire is embedded in the sheet in a zigzag fashion as shown in Fig. 1, the peripheries of the longitudinal sides (or the rows of turning ends 2a) of the copper wire 2 do not always run parallel to the longitudinal axis of the sheet. As a result, when an electric current is passed through the copper wire 2, the portion 3 of the sheet 1 where the copper wire is not distributed properly with respect to the peripheries of the longitudinal sides of the sheet 1 is not heated enough to be shrunk. Therefore, when such defective polyethylene cover sheet is applied to a steel pipe joint, a gap is formed between the cover sheet and the joint, allowing water to permeate the joint therethrough so that degradation of the protective and anticorrosive characteristics of the sheet results.

According to one aspect of the present invention, there is provided a method of trimming an elongated nonmetallic sheet having a metal embedded therein or attached thereon over the entire length thereof, comprising the steps of:

applying a cutting device for cutting the sheet, said cutting device being stationary in the longitudinal direction of the sheet;

transferring the sheet in the longitudinal direction along a predetermined straight transfer passage;

profiling the periphery of each of the longitudinal sides of the metal gradually while the sheet is in the process of being transferred and obtaining a first information signal indicative of a position a predetermined lateral distance outwardly or inwardly from the periphery profile or outline;

detecting the longitudinal moving distance of the sheet and obtaining a second information signal indicative of the moving distance of the sheet; and

controlling the lateral movement of said cutting device in response to said first and second information signals so that the sheet is cut continuously on each of the longitudinal sides along a line parallel to and a predetermined distance outwardly or inwardly from the periphery of the outline of the corresponding side of the metal.

According to another aspect of the present invention, there is provided an apparatus for trimming an elongated nonmetallic sheet having a metal embedded therein or attached thereon, comprising:

a transfer device including an assembly of a plurality of tables of equal size and adapted so as to carry the sheet in the longitudinal direction along a moving passage of said transfer device;

a couple of penetrant-type sensors arranged midway in the moving passage of said transfer device, each of said sensors being capable of profiling the periphery of each of the longitudinal sides of the metal and of generating an information signal indicative of the position of the periphery;

a cutting device arranged adjacent to said sensors and being capable of moving in the lateral direction with respect to the metal and the sheet;

a detecting device adapted so as to detect the moving distance of said transfer device and being capable of generating an information signal indicative of the moving distance of said transfer device; and

a signal-processing system including a first signal processor for said sensors, a pulse control section for said detecting device, and a first signal processor and a second signal processor for controlling the lateral movement of said cutting device with respect to the metal and the sheet;

whereby the sheet is cut automatically and continuously on each of the longitudinal sides thereof along a line a predetermined lateral distance outwardly or inwardly from the periphery of the corresponding side of the metal.

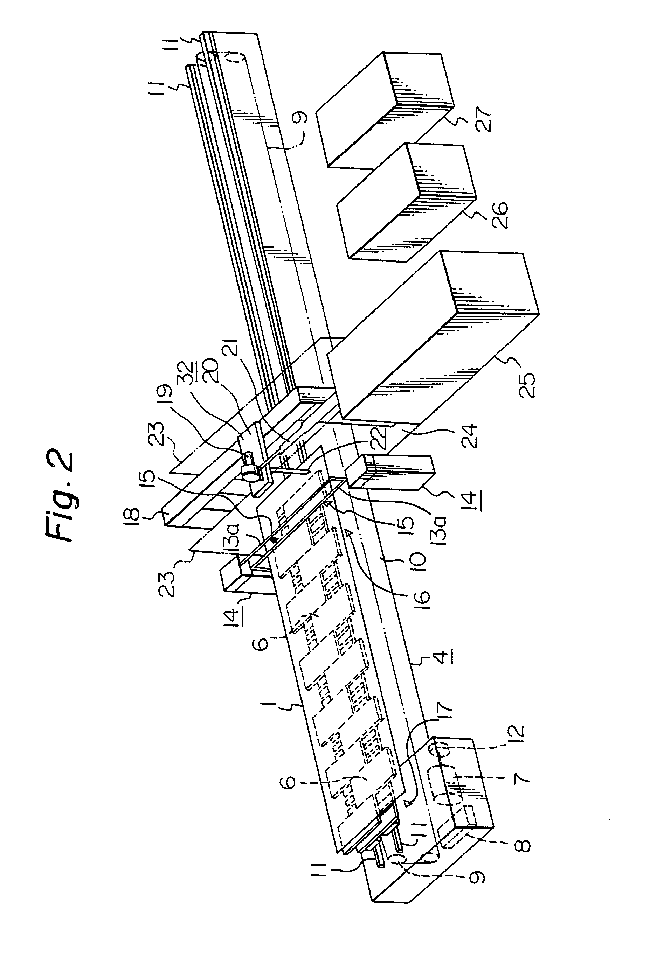

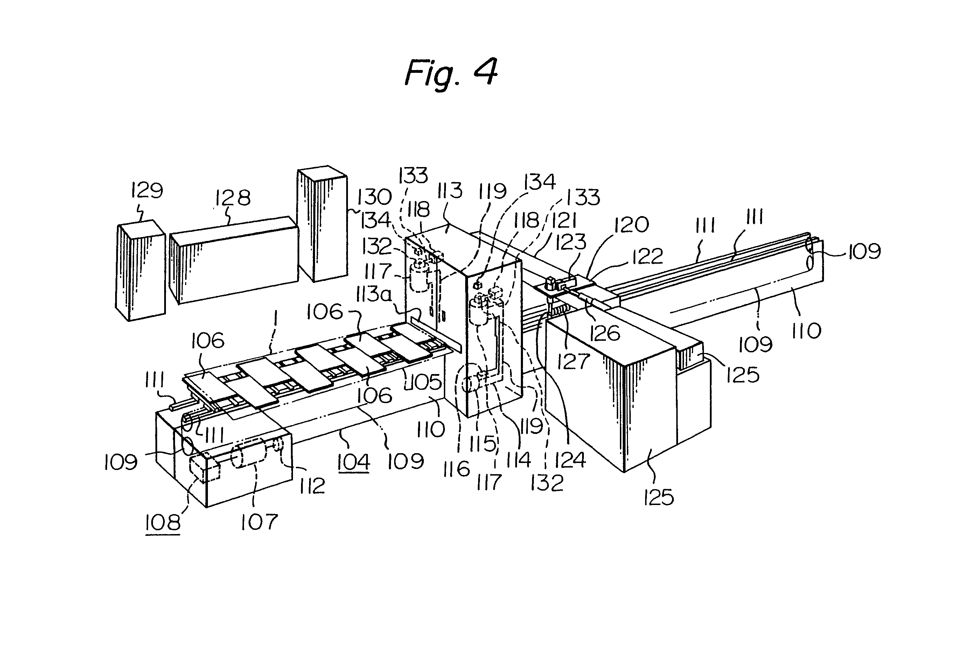

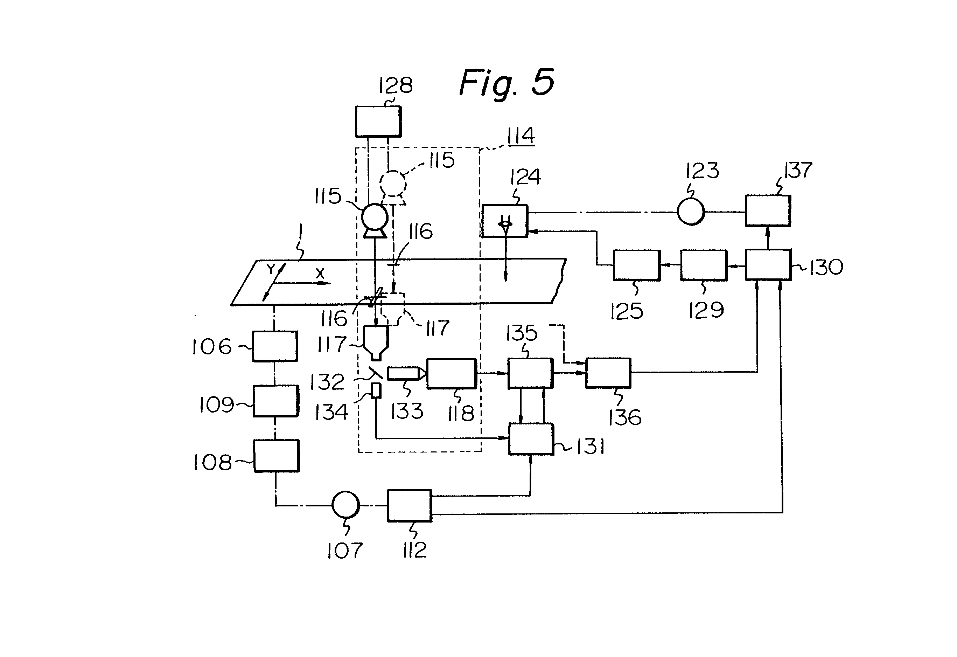

Fig. 1 is a plan view of one example of an elongated nonmetallic and metal-embedded sheet to be trimmed by the method of the present invention; Fig. 2 is a perspective view of a preferred embodiment of an apparatus of the present invention for trimming the sheet shown in Fig. 1; Fig. 3 is a block diagram of a control mechanism of the apparatus shown in Fig. 2; Fig. 4 is a perspective view of another embodiment of the apparatus of the present invention which corresponds to the apparatus shown in Fig. 2; and Fig. 5 is a block diagram of a control mechanism of the apparatus shown in Fig. 4 which corresponds to the block diagram shown in Fig. 3.

Description of the Preferred Embodiments

The preferred embodiments of the present invention will now be explained in detail by way of example with reference to the accompanying drawings.

In Fig. 2, numeral 4 designates a transfer device provided with an assembly of tables 6 of equal size which is adapted so as to carry an elongated nonmetallic and metal-embedded sheet 1 in the longitudinal direction, the sheet being the same as that shown in Fig. 1. The table assembly is movable along guides 11 provided on a frame 10 through a mechanism including a variable speed motor 7, a reducing gear 8, and a chain-type X-axis driving means 9, and the width of the table assembly is adjusted by moving the tables 6 crosswise so that the width corresponds to the lateral width of the sheet 1 to be placed on the table assembly. The motor 7 is coupled to a pulse-counting rotary encoder 12 which forms a detecting device capable of generating a signal displaying the moving distance of the table assembly. Further, the table assembly has attached to it a photo-electric-type sensor 17 which generates a drive signal for controlling the movement of the table assembly.

At a position midway along the moving passage of the table assembly, there are provided: a pair of sensors 15 arranged above the frame 10 and positioned apart; a sensor 16 located behind one of the sensors 15; two sets of sensor-control mechanisms 14, having pulse motors 13 (not shown) and being arranged on both sides of the frame 10; and, a couple of parallel rods 13a extending between the sensor-control mechanisms 14, to which rods the sensors 15 are mounted respectively so that the sensors 15 with the corresponding rods 13a are moved by the motors 13, respectively. Each of the sensors 15 is of the penetrant type, especially of an eddy-current type capable of detecting the variation of a magnetic force generated in the metallic wire 2 within the sheet 1 when the wire is subjected to the line of magnetic force. Further, the sensors 15 move over the sheet 1 along their respective rods 13a so as to profile the peripheries of the longitudinal sides (viz, the rows of turning ends 2a) of the wire 2 and generate pulsating information signals relating to the positions thereof, respectively. The sensor 16 is adapted so as to detect the top and the rear ends of the sheet 1.

On the downstream side of the moving passage of the table assembly and at a position located a predetermined distance from each of the sensors 15, there is provided a sheet-cutting device comprising a super high-pressure water-jet cutter 32 which is movable in the lateral direction. The cutter 32 includes a bracket 20 provided on a frame 18 and being movable laterally with respect to the sheet 1 through a rack-pinion mechanism or the like, a step motor 19 for driving the water-injecting head of the cutter 32, a water jet-injection nozzle 22 fixed to the bracket 20 so as to face downward, a telescopic passage 21 for feeding a super high-pressure water jet to the nozzle 22 from a super high-pressure water-jet generator 25, a splash prevention wall 23, and a drain pit 24. The step motor 19 is controlled by a motor controller 31 (not shown in Fig. 2, but shown in Fig. 3).

Numeral 26 designates a controlling the super high-pressure water-jet generator 25, and numeral 27 designates a signal processor for the super high-pressure water-jet cutter 32. The signal processor 27 receiving a signal from the pulse control section 28 (not shown in Fig. 2, but shown in Fig. 3) which receives a signal from the rotary encoder 12 and a signal from the sensor signal processor 29 (not shown in Fig. 2, but shown in Fig. 3). The signal processor 27 generates a control signal for controlling the lateral movement of the nozzle 22 with respect to the periphery of each of the longitudinal sides (or the rows of turning ends 2a) of the metallic wire 2 in the sheet 1. In this case, the control signal includes therein components regarding such data as the pattern of the metallic wire, the distance between the periphery of each of the longitudinal sides of the wire and each of the cutting lines 2c along which the sheet 1 is cut, and the distance between each of the sensors 15 and the nozzle 22 which have already been combined with the information signal from the rotary encoder 12 and the information signals from the sensors 15.

In the block diagram shown in Fig. 3, the rotary encoder 12 transmits an information signal regarding the longitudinal (viz, X-axis) moving distance of the table assembly to a pulse control section 28 where the signal is combined with the signals from the sensor 15, and the pulse control section 28 transmits a signal to the signal processor 27, which in turn generates a command signal for controlling the movement of the super high-pressure water-jet injection nozzle 22.

Thus, the eddy-current type sensors 15, the sensor-driving pulse motors 13, the sensor control mechanisms 14, the sensor signal processor 29, the rotary encoder 12, and the pulse control section 28 transmit and receive signals as designated by the arrows shown in Fig. 3 so that the movement of the nozzle 22 is controlled. That is, the signal indicative of the position of the periphery of the metal is transmitted to the pulse control section 28, and the signal from the rotary encoder 12 and the signal from the sensor signal processor 29 are combined to form a signal in the pulse control section 28, which signal is transmitted from the section 28 to a signal processor 27 for controlling the jet nozzle 22.

Numeral 19 designates a motor for driving the super high-pressure water-jet cutter 32, numerals 25 and 26 designate the super high-pressure water-jet generator and the controller for the generator 25, respectively, as already mentioned hereinbefore, and numeral 31 designates a motor controller for controlling the motor 19. The signal processor 27 at once stores the signal from the signal processor 29 via the pulse control section 28 and transmits to the motor controller 31 an information signal regarding the Y-axis movement of the nozzle 22 so that the nozzle 22 moves automatically in the Y-axis direction. The dotted arrow marked with an asterisk designates a signal from the remaining sensor 15. Further, it should be noted in this connection that although the embodiment shown in Fig. 2 and 3 includes only a single super high-pressure water-jet cutter, it is possible to provide a couple of such cutters and to make them correspond to the two sensors, respectively, so that they are separately controlled.

In a case where the sheet 1 embedded with the metallic wire (copper) 2 shown in Fig. 1 is trimmed successively on one of the longitudinal sides thereof at a position a predetermined distance outwardly from the periphery of the corresponding side of the metallic wire 2, the sheet 1 is held stationarily on the table assembly in advance in such a manner that both sides 1a of the sheet 1 project somewhat beyond the corresponding sides of the table assembly, respectively, as shown in Fig. 2 and the sides of the table assembly lie inside the corresponding sides of the metallic wire 2, respectively.

In the above condition, when the motor 7 is operated, the sheet 1 is moved in the longitudinal direction thereof so as to pass under the sensors 15 whereupon the photoelectric-type sensor 16 detects the top and then the rear ends of the sheet 1 and generates respective signals to the pulse control section 28 while at the same time the sensor 15 located on the cutting side of the sheet 1 begins to profile the periphery (or the rows of turning ends 2a) of the corresponding side of the metallic wire 2 and generates an information signal to the pulse control section 28 where the signal is combined with the X-axis table-moving distance signal from the rotary encoder 12 and the combined signal is then converted into a two dimensional signal to be transmitted to the signal processor 27, which in turn generates a signal for controlling the lateral movement of the nozzle 22 with respect to the metallic wire 2 and the sheet 1. The manner in which the signal processor 27 produces the control signal for the nozzle 22 is such that the components of the information signal (from the sensor 15) regarding the positions of the first three turning ends 2a of the metallic wire 2 are synthesized to thereby produce a first signal component displaying the first part of the line 2c (Fig. 1) parallel to the line connecting the three turning ends and forming a part of the curved peripheral line 2b of that side of the metallic wire and then like components regarding the position of the fourth turning end and the positions of the adjoining two of the first three turning ends behind the former are synthesized to produce a second signal component displaying another part of the line 2c and so on to thereby produce an information signal displaying the entire length of the line 2c along which the movement of the nozzle 22 is controlled whilst the sheet 1 is being transferred.

Thus, when the sheet 1 reaches the super high-pressure water-jet nozzle 22 of the cutter 32, the nozzle 22 begins to cut the sheet 1 with a super high-pressure water jet therefrom while it is controlled by the control signal from the signal processor 27 so that the desired side of the sheet 1 is cut automatically and continuously along the line 2c, which is spaced, for example, several millimeters from each of the turning ends 2a of the corresponding side of the metallic wire 2.

It should be noted in this connection that although the embodiment shown in Fig. 2 includes only a single cutter, it is of course possible to provide a couple of such cutters corresponding to the two sensors 15 so that the sheet 1 is cut on both sides simultaneously in a single step. Likewise, the eddy current-type sensors 15 of the embodiment in Fig. 2 can be replaced with other types of penetrant sensors such as a static capacity-type sensor capable of detecting the static-capacity of the metal in the sheet, an X-ray-type sensor based on the rate of penetration of X-rays through the sheet, or an X-ray image-type sensor capable of forming an X-ray image through the sheet. Further, the sheet cutter 32 can be replaced with an edge-type cutter such as a band saw, a laser beam cutter, or a plasma jet cutter.

Figs. 4 and 5 show another embodiment of the present invention wherein a laser-beam type sheet-cutting device and a couple of X-ray-type sensors are used.

In Fig. 4, numeral 104 designates a transfer device provided with a table assembly formed from a plurality of tables 106 of equal size and adapted so as to transfer longitudinally a sheet 1 having a high rate of laser beam adsorption and being embedded with a metallic wire having a low rate of laser beam adsorption, the sheet and the metallic wire being the same as those shown in Fig. 1.

The table assembly is movable along guides 111 provided on a frame 110 through a mechanism including a variable speed motor 107, a reducing gear 108, and a chain-type driving means 109. The width of the table assembly is adjusted by moving the tables 106 crosswise so that the width corresponds with the width of the sheet 1 to be placed thereon. The motor 107 is coupled to a pulse-counting rotary encoder 112 which forms a detecting device for generating an information signal indicative of the longitudinal moving distance of the table assembly.

At a position midway along the moving passage of the table assembly, there is provided across the frame 110 an X-ray-proof sensor casing 113 which houses a pair of non-contact-type sensors 114. The sensors 114 are adapted so as to profile the peripheries of the longitudinal sides (viz the rows of turning edge 2a) of the metallic wire 2 in the sheet 1 and generate information signals regarding the positions of the turning ends 2a of the metallic wire 2, respectively. Numeral 113a designates an inlet-outlet port through which the table assembly and the sheet 1 pass. Each of the sensors 114 includes an X-ray tube 115, a slit 116 with a reference mark, an image intensifier 117 arranged just above the slit 116 in opposite relationship with the latter, a half mirror 132 for detecting the sheet 1 on the table assembly, a photo-sensor 134, a lens 133, and a line camera 118 attached to a frame 119 and adapted so as to detect the position of the metallic wire 2 in the sheet 1. The above pair of the X-ray-type sensors 114 are arranged so that they are located apart from each other crosswise at positions at which both of the longitudinal side edges of the metallic wire pass and are movable crosswise manually.

Further, on the downstream side of the moving passage of the table assembly, there is provided a laser-cutting device 120 positioned a predetermined distance from the sensors 114. The laser-cutting device 120 comprises a bracket 122 which is mounted on a frame 121 and which is movable laterally with respect to the sheet 1 through a rack-pinion mechanism or the like, a laser beam head-driving step motor 123 mounted on the bracket 122, a laser head 124 attached to the bracket 122 so as to face downward, a telescopic passage 126 through which a laser beam from a $CO_2$ laser oscillator 125 is fed to the laser head 124, and an exhaust smoke duct 127.

Numeral 128 designates an X-ray control panel, numeral 129 designates a control panel for controlling the positions of the laser oscillator 125 and the laser head 124, and numeral 130 designates a signal processor which generates a command signal for controlling the lateral movement of the laser head 124 of the laser-cutting device 120 after receiving the signal from the detecting device formed from the rotary encoder 112. With the above arrangement, the sheet 1 is cut on one side thereof along a line a predetermined distance outwardly from the periphery of the corresponding side or the row of turning ends 2a of the metallic wire 2 in the sheet 1 while the sheet is being transferred.

A pulse control section 131, a camera controller 135 and a second signal processor 136 are not shown in Fig. 4, but are shown in Fig. 5 and will be described hereinafter.

In the block diagram shown in Fig. 5, the information signal regarding the X-axis moving distance of the table assembly is transmitted from the rotary encoder 112 to a pulse control section 131 where the signal is combined with the information signals from the non-contact-type sensors 114, including the X-ray tube 115, the X-ray penetrant slit 116, the image intensifier 117, the half-mirror 132, a lens 133, the line camera 118 and the photo-sensor 134 as already mentioned hereinbefore. The X-ray tube 115 is controlled through the X-ray control panel 128. The pulse control section 131 transmits a signal to a second signal processor 130 for the laser head 124 via the camera controller 135 and a first signal processor 136. The rotary encoder 112 also transmits its signal directly to the second signal processor 130, which in turn transmits through its control panel 129 a control signal to the laser head 124 of the laser-cutting device 120 via the laser oscillator 125. Further, the signal processor 130 also transmits to a motor controller 137 a control signal for moving the laser head 124 automatically in the lateral (viz, Y-axis) direction through the motor controller 137. The dotted arrow adjacent to the second signal processor 136 designates a signal from the remaining sensor 114. Further, it should be noted that although the embodiment shown in Figs. 4 and 5 includes only a single laser-cutting device, it is possible to provide a couple of such devices and to make correspond to the two sensors 114, respectively, so that they are separately controlled.

In a case where the sheet 1 embedded with the metallic (copper) wire 2 shown in Fig. 1 is trimmed successively on one of the longitudinal sides thereof at a position a predetermined distance outwardly from the periphery of the corresponding side of the metallic wire 2, the sheet 1 is held stationarily on the table assembly in such a manner that both sides 105 of the sheet 1 project somewhat beyond the corresponding sides of the table assembly, respectively, as shown in Fig. 4 and the sides of the table assembly lie inside the corresponding sides (or the rows of turning ends 2a) of the metallic wire 2, respectively.

In the above condition, when the motor 107 is operated, the sheet 1 is transferred in the longitudinal direction and passes under the two sensors 114 whereupon one of the sensors 114 located on the cutting side of the sheet 1 begins to profile the periphery of the side of the sheet 1 to be cut through its photo-sensor 134 and transmits an information signal relating thereto to the pulse control section 131 where the signal is combined with the table moving-distance signal from the rotary encoder 112. Further, the sensor 114 also detects the number of turning ends 2a of the corresponding side of the metallic wire 2 with its line camera 118 and generates a signal indicating the distance between each of the turning ends of the wire and the reference mark on the slit 116 of the sensor. This signal is transmitted through the camera controller 135 to the pulse control section 131 where it is combined with the above-mentioned table moving-distance information signal from the rotary encoder 112. Thus, the combined two-dimensional information signal is transmitted to the signal processor 136 where the signal is converted into a signal suitable for transmission to the signal processor 130 for the laser-cutting device 120 and, finally, the signal processor 130 combines the signal from the signal processor 136 with data regarding the distance between the sensor 114 and the laser head 124 and the distance between each of the turning ends 2a of the metallic wire 2 and the cutting line 2c along which the side of the sheet is cut and produces a new signal in the same three turning ends pickup system as described with respect to the embodiment shown in Fig. 2.

Thus, when the top end of the sheet 1 reaches the laser-cutting device 120, the laser head 124 begins to cut the sheet 1 with a laser beam therefrom while the lateral movement of the laser head is controlled by the control signal from the signal processor 130 so that the sheet 1 is cut successively on one of the longitudinal sides thereof at a position a predetermined distance, for example, on the order of several millimeters, outwardly from the periphery of the corresponding side (or the row of turning ends 2a) of the metallic wire 2. The above-described cutting process also is applied in cutting the remaining side of the sheet 1. In this connection, it is of course possible to cut the sheet on both longitudinal sides thereof simultaneously provided that the laser-cutting device 120 is equipped with an additional laser head.

As described above, the present invention has the following various advantages:

(1) an elongated sheet having a metal embedded therein or attached thereon virtually throughout the length thereof can be trimmed by cutting the sheet accurately and at a predetermined dimension continuously and automatically on each side thereof at a position a predetermined distance outwardly from the corresponding side of the metal without cutting the metal even when the sheet is opaque;

(2) a polyethylene cover sheet having a copper wire embedded in its thermo-shrinkable layer can be cut accurately on each of the longitudinal sides thereof at a position a predetermined distance outwardly from the corresponding side of the copper wire so that the sheet thus trimmed can be effectively applied to a weld joint for steel pipes in a water-tight manner, thereby preventing the joint from corroding;

(3) due to the use of a laser-cutting device, a sheet comprising a synthetic resin plate having an aluminum plate applied thereon can be trimmed by cutting only the synthetic resin plate at a position a predetermined distance inwardly from any side of the aluminum plate, taking advantage of the fact that the synthetic resin plate has a high rate of laser beam adsorption while the aluminum plate has a low rate of laser beam adsorption;

(4) due to the provision of a super high-pressure water-jet cutter or a laser beam cutter, a thermo-shrinkable sheet can be cut without shrinkage and a curved cutting line can be traced easily so that even a continuous curved surface can be cut easily and accurately;

(5) many kinds and qualities of sheets or a composite sheet produced by using an adhesive can be cut clearly with only a small amount of cutting chips resulting and the chips can be removed easily.

## Claims

1. A method of trimming an elongated non-metallic sheet having a metal embedded therein or attached thereon over the entire length thereof, comprising the steps of:
applying a cutting device for cutting the sheet, said cutting device being stationary in the longitudinal direction of the sheet;
transferring the sheet in the longitudinal direction along a predetermined straight transfer passage;
profiling the periphery of each of the longitudinal sides of the metal gradually while the sheet is being transferred and obtaining a first information signal indicative of a position a predetermined lateral distance outwardly or inwardly from the periphery of the profile or outline;
detecting the longitudinal moving distance of the sheet and obtaining a second information signal indicative of the moving distance of the sheet; and
controlling the lateral movement of said cutting device in response to said first and second information signals so that the sheet is cut continuously on each of the longitudinal sides of the sheet along a line parallel to and a predetermined distance outwardly or inwardly from the periphery of the outline of the corresponding side of the metal.

2. A method as claimed in claim 1, wherein the metal is a wire arranged in a zigzag fashion and having turning ends on each longitudinal side of the sheet, and the manner in which the periphery of the sheet is profiled is such that the positions of at least three neighboring turning ends are detected and information signals indicative of the three positions are obtained, the three signals are synthesized to thereby produce a signal component displaying a part of said line parallel to said periphery of the outline and a predetermined distance outwardly from the periphery and then like signals indicative of the position of the fourth turning end and the positions of the adjoining two of said three turning ends behind the former are synthesized to produce a signal component displaying a following part of said line.

3. An apparatus for trimming an elongated nonmetallic sheet (1) having a metal (2) embedded therein or attached thereon, comprising:
a transfer device (4, 104) including an assembly of a plurality of tables (6, 106) of equal size and adapted so as to carry the sheet (1) in the longitudinal direction along a moving passage of said transfer device (4, 104);
two penetrant-type sensors (15, 114) arranged midway in the moving passage of said transfer device, each of said sensors being capable of profiling the periphery (2b) of each of the longitudinal sides of the metal (2) and of generating an information signal indicative of the position of the periphery (2b);

a cutting device (32, 120) arranged adjacent to said sensors (15, 114) and being capable of moving in the lateral direction with respect to the metal (2) and the sheet (1);

a detecting device (12, 112) adapted so as to detect the moving distance of said transfer device (4, 104) and being capable of generating an information signal indicative of the moving distance of said transfer device (4, 104); and

a signal-processing system including a first signal processor (29, 136) for said sensors (15, 114), a pulse control section (28, 131) for said detecting device (12, 112), and a first signal processor and a second signal processor (27, 130) for controlling the lateral movement of said cutting device (32, 120) with respect to the metal (2) and the sheet (1);

whereby the sheet (1) is cut automatically and continuously on each of the longitudinal sides thereof along a line (2c) a predetermined lateral distance outwardly or inwardly from the periphery of the corresponding side of the metal (2).

4. An apparatus as claimed in claim 3, wherein said penetrant-type sensors are X-ray-type (114) or eddy-current type (15) sensors and said cutting device is a super high-pressure water-jet cutter (22) or a laser-cutting device (124).

**Patentansprüche**

1. Verfahren zum Beschneiden einer langgestreckten, nicht-metallischen Platte mit über ihre ganze Länge darin eingebettem oder ihr zugeordnetem Metallteil, umfassend die Schritte:

Anlegen einer Schneidvorrichtung zum Schneiden der Platte, wobei die Schneideinrichtung in Längsrichtung der Platte stationär ist;

Bewegen der Platte in Längsrichtung entlang einer vorgegebenen gradlinigen Bewegungsbahn;

schrittweises Profildarstellen der Begrenzungsfläche jeder der Längsseiten des Metallteiles während der Bewegung der Platte und Ableiten eines ersten Informationssignales, das kennzeichnend ist für eine Position, die in einem bestimmten seitlichen Abstand nach außen oder nach innen von der Begrenzungsfläche des Profils oder der Außenlinie liegt;

Erfassen der Längsbewegungsstrecke der Platte und Ableiten eines zweiten Informationssignales, das die Bewegungsstrecke der Platte anzeigt; und

Steuerung der Querbewegung der Schneideinrichtung in Abhängigkeit von den ersten und zweiten Informationssignalen derart, daß die Platte fortlaufend auf jeder der Längsseiten der Platte entlang eine Linie geschnitten wird, die parallel in einem bestimmten Abstand nach außen oder nach innen von der Begrenzungsfläche der Außenlinie der jeweiligen Seite des Metallteiles liegt.

2. Verfahren nach Anspruch 1, bei dem das Metallteil ein in Zickzack-Form verlegter Draht ist, der im Bereich beider Längsseiten der Platte Umkehrpunkte hat, wobei die Art, gemäß der die Begrenzungsfläche der Platte im Profil dargestellt wird, derart ist, daß die Positionen von mindestens drei benachbarten Umkehrpunkten erfaßt und Informationssignale abgeleitet werden, die kennzeichnend sind für die drei Positionen, wobei die drei Signale zusammengesetzt werden, um dadurch eine Signalkomponente zu erzeugen, die einen Teil der Linie darstellt, die parallel zu der Begrenzungsfläche der Außenlinie und in einem bestimmten Abstand nach außen von der Begrenzungsfläche liegt, und wobei dann ähnliche Signale, die kennzeichnend sind für den vierten Wendepunkt und die Stellungen der daran anschließenden zwei der drei vorherigen Wendepunkte hinter dem ersten zusammengefaßt werden, um eine Signalkomponente zu erzeugen, die den folgenden Abschnitt dieser Linie darstellt.

3. Eine Vorrichtung zum Beschneiden einer langgestreckten, nichtmetallischen Platte (1) mit darin engebettem oder ihr zugeordnetem Metallteil (2) enthaltend:

eine Fördereinrichtung (4, 104), die eine Anordnung von mehreren gleich großen Tafeln (6, 106) umfaßt und in der Lage ist, die Platte (1) in der Längsrichtung entlang einer Bewegungsbahn dieser Fördereinrichtung (4, 104) zu bewegen;

zwei Durchdringungssensoren (5, 114), die im mittleren Bereich der Bewegungsbahn der Fördereinrichtung angeordnet sind und von denen jeder Sensor in der Lage ist, die Begrenzungsfläche (2b) jeder der beiden Längsseiten des Metallteiles (2) im Profil darzustellen und ein Informationssignal zu erzeugen, das die Position der Begrenzungsfläche (2b) anzeigt;

eine Schneideinrichtung (32, 102), die benachbart zu diesen Sensoren (15, 114) liegt und in Querrichtung zu dem Metallteil (2) und der Platte (1) beweglich ist;

eine Erfassungs- bzw. Anzeigeeinrichtung (12, 112) zum Erfassen bzw. Anzeigen der Bewegungsstrecke der Fördereinrichtung (4, 104), um ein Informationssignal zu erzeugen, daß die Bewegungsstrecke der Fördereinrichtung (4, 104) anzeigt; und

ein Signalverarbeitungssystem mit einem ersten Signalprozessor (29, 136) für die Sensoren (15, 114), ein Impulssteuerglied (28, 130) für die Erfassungs- bzw. Anzeigeeinrichtung (12, 112) und einen ersten Signalprozessor und einen zweiten Signalprozessor (27, 130) zur Steuerung der Querbewegung der Schneideinrichtung (32, 120) relativ zu dem Metallteil (2) und der Platte (1) derart, daß

die Platte (1) automatisch und fortlaufend auf jeder ihrer Längsseiten entlang einer Linie (2c) geschnitten wird, die in einem bestimmten seitlichen Abstand nach außen oder nach innen von der Begrenzungsfläche der jeweiligen Seite des Metallteiles (2) liegt.

4. Vorrichtung nach Anspruch 3, bei der die Durchdringungssensoren Röntgenstrahlsensoren (114) oder Wirbelstromsensoren (15) sind, während die Schneideinrichtung ein Superhochdruck-Wasserstrahlschneider (22) oder ein Laser-Schneidgerät (124) ist.

## Revendications

1. Procédé de découpe des bords d'une feuille non métallique allongée dans laquelle un métal est incorporé ou sur laquelle un métal est fixé sur toute sa longueur, comprenant les étapes suivantes:

l'application d'un dispositif de coupe de la feuille, ce dispositif étant fixe dans la direction longitudinale de la feuille,

le transport de la feuille dans sa direction longitudinale suivant un passage rectiligne prédéterminé de transport,

la détermination du profil de la périphérie de chacun des côtés longitudinaux du métal, progressivement pendant que la feuille est transportée, et l'obtention d'un premier signal d'information représentatif d'une position qui est à une distance latérale prédéterminée de la périphérie du profil ou de la configuration, vers l'extérieur ou vers l'intérieur,

la détection de la distance longitudinale de déplacement de la feuille et l'obtention d'un second signal d'information représentatif de la distance de déplacement de la feuille, et

la commande du déplacement latéral du dispositif de coupe en fonction du premier et du second signal d'information de manière que la feuille soit découpée de façon continue sur chacun de ses côtés longitudinaux, suivant une courbe parallèle à la périphérie du profil du côté correspondant du métal et à une distance prédéterminée vers l'extérieur ou vers l'intérieur de cette périphérie.

2. Procédé selon la revendication 1, dans lequel le métal est un fil métallique placé sous forme sinueuse et ayant des extrémités repliées à chaque côté longitudinal de la feuille, et la détermination du profil de la périphérie de la feuille est tel que les positions d'au moins trois extrémités repliées adjacentes sont détectées et les signaux d'information représentatifs des trois positions sont obtenus, les trois signaux sont synthétisés afin qu'ils forment une composante représentant une partie de la ligne parallèle à la périphérie du profil et à une distance prédéterminée vers l'extérieur de cette périphérie puis des signaux correspondants représentatifs de la position de la quatrième extrémité repliée et des positions des deux extrémités adjacentes repliées choisies parmi les trois premières adjacentes repliées choisies parmi les trois premières, se trouvant derrière la quatrième extrémité, sont synthétisés afin qu'ils forment une composante représentant une partie suivante de la courbe.

3. Appareil de découpe des bords d'une feuille non métallique allongée (1) dans laquelle un métal (2) est enrobé ou sur laquelle un métal est fixé, comprenant:

un dispositif de transport (4, 104) comprenant un ensemble qui comprend plusieurs tables (6, 106) de même dimensions et destinées à porter la feuille (1) en direction longitudinale le long d'un passage de déplacement du dispositif de transport (4, 104),

deux capteurs (15, 114) à pénétration placés le long du passage de déplacement du dispositif de transport, chacun des capteurs pouvant déterminer le profil de la périphérie (2b) de chacun des côtés longitudinaux du métal (2) et créer un signal d'information représentatif de la position de la périphérie (2b),

un dispositif de coupe (32, 120) adjacent aux capteurs (15, 114) et capable de se déplacer dans la direction latérale par rapport au métal (2) et à la feuille (1),

un dispositif de détection (12, 112) destiné à détecter la distance de déplacement du dispositif de transport (4, 104) et destiné à créer un signal d'information représentatif de la distance de déplacement du dispositif de transport (4, 104), et

un système de traitement de signaux comprenant un premier processeur (29, 136) des signaux des capteurs (15, 114), un section (28, 131) de commande d'impulsions des signaux du dispositif de détection (12, 112), et un premier processeur et un second processeur de signaux (27, 130) destinés à commander le déplacement latéral du dispositif de coupe (32, 120) par rapport au métal (2) et à la feuille (1),

si bien que la feuille (1) est découpée automatiquement et de façon continue à chacun de ses côtés longitudinaux, suivant une courbe (2c) qui est à une distance latérale prédéterminée de la périphérie du côté correspondant du métal (2), vers l'extérieur ou vers l'intérieur.

4. Appareil selon la revendication 3, dans lequel les capteurs à pénétration sont des capteurs de type radiographique (114) ou à courants de Foucauld (15), et le dispositif de découpe est un organe de coupe (22) à jet d'eau à très haute pression ou un dispositif (124) de coupe par laser.

*Fig. 1*

*Fig. 3*

# Fig. 2

0 096 124

*Fig. 4*

*Fig. 5*